## Europäisches Patentamt

## European Patent Office

## Office européen des brevets

(11) Veröffentlichungsnummer: **0 081 115 B1**

(12) **EUROPÄISCHE PATENTSCHRIFT**

(45) Veröffentlichungstag der Patentschrift:
19.02.86

(21) Anmeldenummer: **82110651.5**

(22) Anmeldetag: **18.11.82**

(51) Int. Cl.⁴: **B 60 P 1/44**

(54) Anschlussprofil für eine Lade-Plattform, insbesondere für Fahrzeuge.

(30) Priorität: 09.12.81 AT 5268/81
01.04.82 AT 1286/82

(43) Veröffentlichungstag der Anmeldung:
15.06.83 Patentblatt 83/24

(45) Bekanntmachung des Hinweises auf die Patenterteilung:
19.02.86 Patentblatt 86/8

(84) Benannte Vertragsstaaten:
CH DE LI NL SE

(56) Entgegenhaltungen:
DE - A - 1 680 187
DE - A - 1 932 093
FR - A - 2 260 467

(73) Patentinhaber: **Austria Metall Aktiengesellschaft, A-5282 Braunau am Inn (AT)**

(72) Erfinder: **Falk, Friedrich, Mozartstrasse 56, A-5282 Braunau am Inn (AT)**

(74) Vertreter: **Hain, Leonhard, Dipl.-Ing., Tal 18/IV, D-8000 München 2 (DE)**

ACTORUM AG

## Beschreibung

Die Erfindung betrifft ein Anschlussprofil für eine Lade-Plattform, insbesondere für Fahrzeuge, gemäss dem Oberbegriff des Patentanspruches 1.

Eine Lade-Plattform dieser Art (FR-A-2 260 467) besteht aus einem trogförmigen Anschlussprofil und einer darauf aufgeschweissten Plattform-Platte. An einer Anschlusswand dieses Anschlussprofiles sind Laschen zum Eingriff einer Hubeinrichtung vorgesehen und eine die Trogform bildende Stützwand untergreift die Platte. Mit dem Anschlussprofil zusammen bildet sie ein geschlossenes Hohlkastenprofil. Dabei ist dieses Anschlussprofil an seinen Auflageenden so ausgebildet, dass nur eine die ganze Plattform bildende Platte aufgeschweisst werden kann, die wiederum nicht steif genug ist, grössere Belastungen aufzunehmen, weshalb zusätzliche Stützprofile erforderlich sind. Die verhältnismässig grossflächigen Plattform-Platten müssen ebenso wie die Stützprofile individuell jeder Plattform-Grösse angepasst werden. Wegen ihrer ungünstigen Handhabung wird ihre Bearbeitung erschwert und verteuert. Bei einer anderen bekannten Lade-Plattform (DE-A-1 932 093) ist eine die Plattform bildende Blechplatte an den Umfangsrändern durch ein Hohlkastenprofil verstärkt. Zusätzlich ist ein querverlaufender Profilträger in Trogform vorgesehen, über den Querstege zum Angriff der Lenker eines Hubaggregates aufgeschweisst sind. Der Versteifungsrahmen, der Profilträger und die Querstege können ebenso wie die darauf aufgenietete Platte aus Leichtmetall bestehen. Da die Hydraulik-Anschlusselemente den als Anschlusskasten dienenden Profilträger umgreifen müssen, kann dieser lediglich die Höhe der Rahmenkonstruktion aufweisen. Dieses bekannte Anschlussprofil ist somit in seinen Abmessungen zu beschränkt, um einen torsionssteifen Hohlkastenträger bilden zu können, der unter Umständen einen Hohlkastenrahmen überflüssig machen würde. Dieses Anschlussprofil ist auch nur in Verbindung mit einer die gesamte Plattform einnehmenden Platte brauchbar. Eine solche durch einen Hohlkastenrahmen und Querstegen verstärkte Plattform verlangt aber eine individuelle Anfertigung und eine vorherige Anpassung sämtlicher Einzelteile, wodurch ihre Herstellung aufwendig und teuer wird.

Der Erfindung liegt daher die Aufgabe zugrunde, ein Anschlussprofil für eine Lade-Plattform zu schaffen, das die Anwendung langgelegter Metall- oder Kunststoffprofile zur Bildung der eigentlichen Plattform ermöglicht.

Diese Aufgabe wird an einer Plattform nach dem Oberbegriff des Patentanspruches 1 erfindungsgemäss durch die kennzeichnenden Merkmale dieses Patentanspruches gelöst.

Weitere Merkmale der Erfindung sind in Unteransprüchen beansprucht.

Das erfindungsgemässe Anschlussprofil, dessen Ausmasse unabhängig von der eigentlichen Plattform sind und daher als stabiles Formstück gefertigt sein kann, ist dazu geeignet, plattenbildende Profile aufzunehmen, die mit entsprechend ausgebildeten Anschlussstellen des trogförmigen Anschlussprofiles verbindbar sind. Diese plattenbildenden Profile lassen sich einfach, billig und den Erfordernissen angepasst herstellen. Ihre Handhabung und Verarbeitung ist ebenfalls vereinfacht und erleichtert. Obwohl die Plattformen auch nach verschiedenen Belastbarkeiten zu unterteilen sind, reichen bei der erfindungsgemässen Ausführungsform zwei bis drei verschieden starke plattenbildende Profile aus, um optimale Plattformen üblicher Grössen herzustellen.

Die Erfindung wird nachfolgend anhand von Ausführungsbeispielen, die auch in der Zeichnung dargestellt sind, näher beschrieben. Es zeigen:

Fig. 1 einen Schrägriss einer Lade-Hubwand,

Fig. 2 einen Längsschnitt durch eine zusammengebaute Lade-Hubwand,

Fig. 3 einen Längsschnitt durch eine abgeänderte Lade-Hubwand,

Fig. 4 eine Seitenansicht einer unterteilten aufgeklappten Hubwand,

Fig. 5 eine Seitenansicht der zusammengeklappten Hubwand,

Fig. 6 einen vergrösserten Schnitt durch die Scharnierprofile und

Fig. 7 eine Draufsicht auf eine Scharnierverbindung nach Fig. 6.

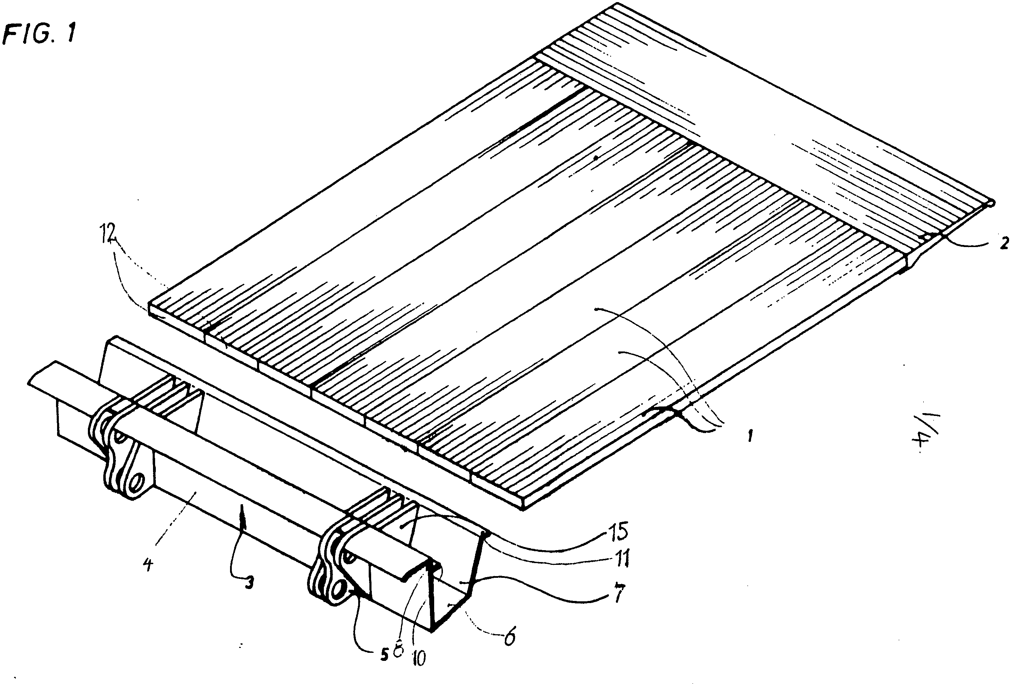

In Fig. 1 ist ein Anschlussprofil 3 in Form eines offenen Profiltroges und mit den eingebundenen Anschlusslaschen 5 für eine Hubeinrichtung ausgerüstet, in Explosionsdarstellung gezeigt. Die darauf zu befestigenden längsgelegten Plattenprofile 1 und ein quergelegtes Zungenprofil 2 sind bereits vereinigt. Zur besseren Verbindung reichen die Anschlusslaschen-Fortsätze 15 in den Anschlusstrog hinein, wo sie besser mit diesem verschweisst werden können. Wie insbesondere die Figuren 1 bis 3 zeigen, besteht das trogförmige Anschlussprofil aus einer etwa senkrechtstehenden Anschlusswand 4, einem Trogboden 6 und einer Abstützwand 7. Auf der Innenseite der Anschlusswand 4 befindet sich eine Auflageleiste 10, über die sich die Anschlusswand um eine Stosswand 8 erhebt. Auf etwa der Höhe der Anschlussleiste 10 ist die Abstützwand mit einem Auflagerand 11 versehen.

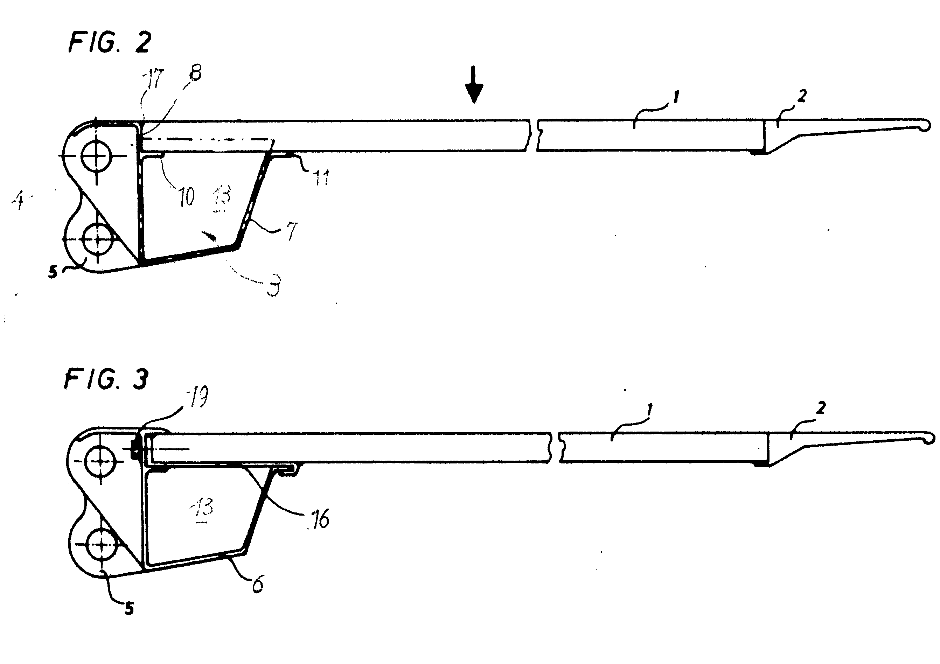

In den Fig. 2 und 3 sieht man einen beim Zusammenbau entstehenden geschlossenen torsionsfesten Hohlkasten 13, welcher die durch Pfeil gekennzeichneten auftretenden Belastungskräfte aufnehmen kann. In Fig. 2 wird die Hubwand durch Verschweissung bei 17 hergestellt. Fig. 3 zeigt eine andere Verbindungsart, und zwar werden hier über ein Zwischenprofil 16 die Plattenprofile 1 mittels Schrauben 19 am Anschlussprofil 3 angeschlossen, um den Hohlkasten zu bilden. Das Zwischenprofil ist entsprechend abgekantet, es übergreift den Auflagerand 11 und liegt auf der Auflageleiste 10 auf sowie an der Stosswand 8 an.

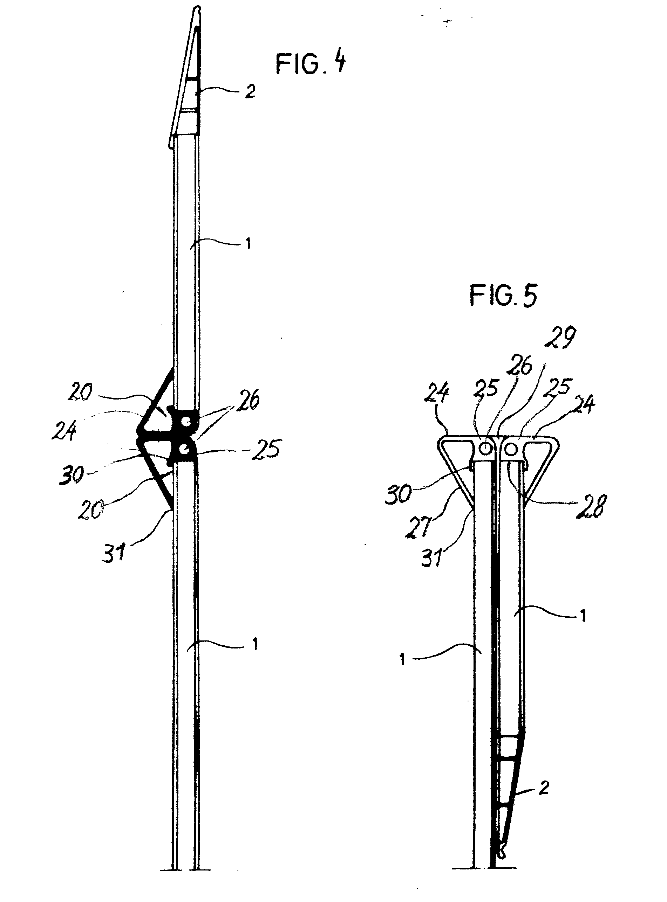

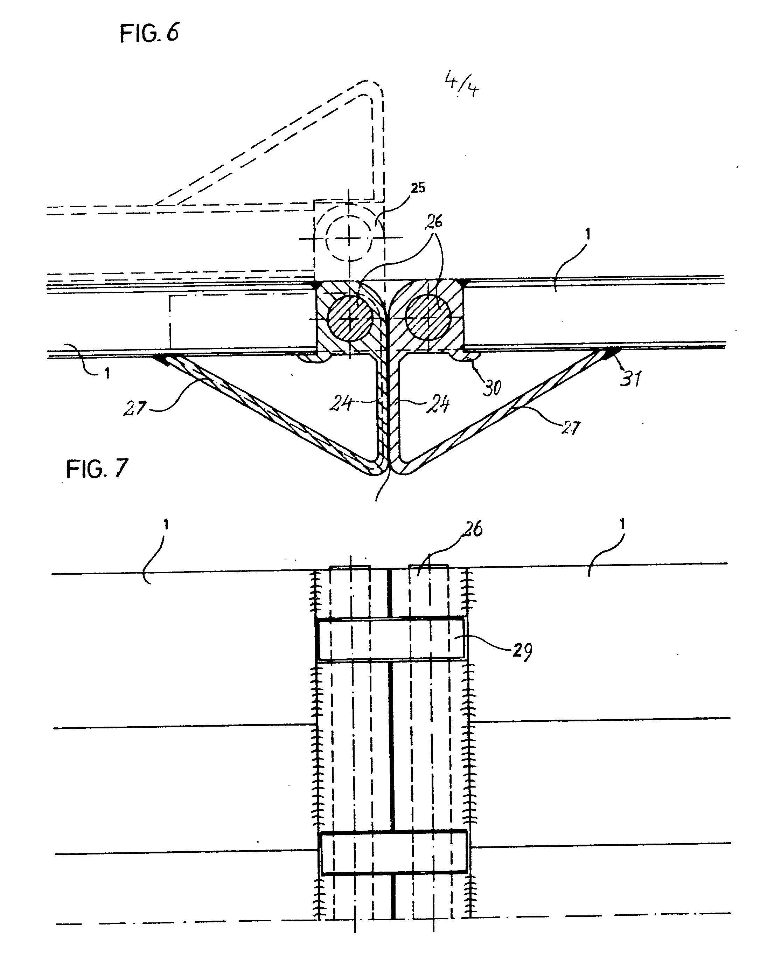

Wie aus den Fig. 4 bis 6 zu ersehen ist, besteht eine Lade-Hubwand aus in Längsrichtung nebeneinander angeordneten Plattenprofilen 1, z.B.

aus Aluminium-Strangpressprofilen, die am Aufhängeende, z.B. durch ein nicht dargestelltes Anschlussprofil, zusammengefasst sind, das auch die Anlenklaschen für die Hubarme trägt. Am anderen Ende befindet sich das keilförmige Zungenprofil 2. In der Mitte ist die Hubwand unterteilt und durch einander gegenüberliegende, gleichartige Scharnierprofile 20 verbunden. Die Scharnierprofile sind wie die Anschlussprofile 3 aus Anschlusswänden 24, Abstützwänden 27, den Auflageleisten 30 und Stosswänden 28 gebildet. In oberhalb der Auflageleisten 30 ausgebildeten Bolzenlagern 25 sind Bohrungen für Scharnierbolzen 26 vorgesehen. Diese sind von in Abständen angeordneten Laschen 29 zu einem Klappscharnier verbunden. Die nach unten stehenden Anschlusswände 24 dieser Scharnierprofile liegen in aufgeklapptem Zustand nebeneinander und bilden damit einen Begrenzungsanschlag für die Aufklappbarkeit. Da sie auch unter Lasteinwirkung nicht nachgeben dürfen, sind sie mit ihren Enden 31 mit den Plattenprofilen 1 verschweisst, so dass ein torsionssteifer Kasten entsteht, der sowohl gegen Verwindung, etwa bei unsymmetrisch aufliegender Last, als auch gegen Durchbiegen sehr steif ist. Um ein leichteres Anschweissen der Plattenprofile 1 zu ermöglichen, besitzen die Scharnierprofile 20 die Auflageleisten 30, an denen die Plattenprofile 1 angesetzt und verschweisst werden. Es ist somit beim Schweissen leicht, eine neue Positionierung der Plattenprofile zueinander einzuhalten, was für die Ebenheit der Lade-Hubwand sehr wichtig ist.

Die Erfindung ist nicht auf die dargestellten Ausführungsbeispiele beschränkt. So kann das Anschluss- bzw. Scharnierprofil, insbesondere bei einer Ausführung in Stahl, auch aus einem abgekanteten, eingerollten Blech bzw. mit angeschweisstem Rohr bestehen. Vorzugsweise wird es als Pressformstück gefertigt.

**Patentansprüche**

1. Anschlussprofil (3) für langgelegte plattenbildende Metall- oder Kunststoffprofile (1) für eine Lade-Hubwand, insbesondere für Fahrzeuge, mit einer Anschlusswand (4) mit Anschlusslaschen (5) od. dgl. Elemente zum Ankuppeln eines Hubgerätes und einer von einem Trogboden (6) schräg ansteigenden Abstützwand (7), wobei auf den freien Kanten der Anschluss- und Abstützwand ein Plattenelement zu befestigen ist, dadurch gekennzeichnet, dass die Anschlusswand (4) an ihrer Innenseite eine Auflageleiste (10) zur Befestigung der Enden (12) der Plattenprofile (1) aufweist, diese Anschlusswand (4) mit ihrer Stosswand (8) um etwa die Dicke der Plattenprofile (1) über diese Anschlagleiste (10) hochsteht und die Abstützwand (7) auf der Höhe der Auflageleiste (10) mit einem Auflagerand (11) für die Plattenprofile (1) endet.

2. Anschlussprofil nach Anspruch 1, dadurch gekennzeichnet, dass zwischen der Anschlusswand (4) und der Abstützwand (7) in Fortsetzung der Anschlusslaschen (5) Verbindungsstege (15) vorgesehen sind.

3. Anschlussprofil nach Anspruch 1 oder 2, dadurch gekennzeichnet, dass ein die Auflageleiste (10) der Anschlusswand (4) und den Auflagerand (11) der Abstützwand (7) übergreifendes Zwischenprofil (16) als Anschraubunterlage für die Plattenprofile (1) vorgesehen ist.

4. Anschlussprofil nach einem der Ansprüche 1 bis 3, dadurch gekennzeichnet, dass es an den Enden der aneinanderstossenden Plattenprofile (1) einer unterteilten, umklappbaren Lade-Hubwand als Scharnierprofil (20) mit einander zugekehrten Anschlusswänden (24) vorgesehen ist, wobei jede Anschlusswand auf ihrer Innenseite oberhalb der Auflageleiste (10) ein Bolzenlager (25) für einen Scharnierbolzen (26) aufweist, die Scharnierbolzen der umklappbaren Hubwandteile mittels Laschen (29) miteinander verbunden und Anschlusswände (24) sowie Bolzenlager (25) so ausgebildet sind, dass die beiden Hubwandteile in Streckstellung von den Anschlusswänden (24) abgestützt und in Klappstellung aneinanderschlagbar sind.

5. Anschlussprofil nach Anspruch 4, dadurch gekennzeichnet, dass am Bolzenlager (25) die Stosswand (8) für die Plattenprofile (1) und die Auflageleiste (10) ausgebildet sind.

**Revendications**

1. Profilé (3) de fixation pour une plate-forme de soulèvement et de chargement constituée de profilés (1) en métal ou en matière plastique disposés dans le sens de la longueur, notamment pour des véhicules; ce profilé de fixation comportant une paroi (4) d'attache pourvue d'organes de fixation, tels que des pattes (5) d'attache, destinés à se fixer sur un appareil de levage, et une paroi (7) de soutien, qui part obliquement du fond (6) de la gouttière profilée (3), pour recevoir la plate-forme qui se fixe sur les bords libres de la paroi d'attache et de la paroi de soutien; le profilé de fixation étant caractérisé en ce que sa paroi (4) d'attache porte sur sa face interne une nervure (10) d'appui, pour la fixation des extrémités (12) des profilés (1) de la plate-forme; en ce que la paroi (4) d'attache présente une bordure (8) d'about, qui dépasse la nervure (10) d'appui d'une hauteur sensiblement égale à l'épaisseur des profilés (1) de la plate-forme; et en ce que la paroi (7) de soutien du profilé se termine à hauteur du niveau de la nervure (10) d'appui, et comporte en cet endroit une bordure (11) d'appui, pour recevoir les profilés (1) de la plate-forme.

2. Profilé conforme à la revendication 1, caractérisé en ce qu'il comporte des cloisons (15) de liaison disposées entre la paroi (4) d'attache et la paroi (7) de soutien, dans le prolongement des pattes (5) d'attache.

3. Profilé conforme à l'une des revendications 1 ou 2, caractérisé en ce qu'un profilé intermédiaire (16), recouvrant la nervure (10) d'appui de la paroi (4) d'attache et la bordure (11) d'appui de la paroi (7) de soutien, est prévu pour constituer un renfort sur lequel les profilés (1) de la plate-forme se fixent par des vis.

4. Profilé conforme à l'une des revendications 1 à 3, caractérisé en ce qu'il est prévu pour constituer un profilé de charnière (20) à deux parois d'attache (24) fixées en regard l'une de l'autre, aux extrémités correspondantes des éléments profilés (1) d'une plate-forme de soulèvement et de chargement articulée en deux partis rabattables; chacune des deux parois d'attache (24) comportant, du côté de sa face interne et au-dessus de la nervure (30) d'appui un logement (25) pour un axe (26) d'articulation de la charnière; les deux axes (26) d'articulation des parties rabattables de la plate-forme de chargement étant associés par des pattes (29) de liaison; et l'agencement des parois d'attache (24) et des logements (25) des axes d'articulation étant tel que les deux parties de la plate-forme articulée sont en appui l'une sur l'autre, par l'intermédiaire des parois d'attache (24), en position d'extension de la plate-forme, alors que les deux parties de la plateforme s'appliquent l'une contre l'autre en position de rabattement.

5. Profilé conforme à la revendication 4, caractérisé en ce que la bordure (8) d'about pour les éléments profilés (1) de la plate-forme ainsi que la nervure d'appui (30) sont prévues en regard du logement (25) pour l'axe d'articulation.

**Claims**

1. Connecting beam (3) for plate-forming metallic or plastic sections (1) aligned in straight arrangement for a loading platform, especially for vehicles, with a connection wall (4) with connecting brackets (5) or the like elements for connecting a lifting device and a supporting wall (7), the latter rising obliquely from a trough-bottom (6), a plate element having to be attached to the free edges of the connection or supporting wall, characterized in that the inner surface of the connection wall (4) is provided with a supporting ledge (10) for securing the ends (12) of the plate sections (1), that this connection wall (4) with its abutting wall (8) protrudes beyond this supporting ledge (10) by about the thickness of the plate sections (1) and that the supporting wall (7) ends with a supporting edge (11) for the plate sections (1) at the level of the supporting ledge (10).

2. Connecting beam according to claim 1, characterized in that connecting webs (15) are provided between the connection wall (4) and the supporting wall (7) in extension of the connecting brackets (5).

3. Connecting beam according to claim 1 or 2, characterized in that an intermediate profile (16) overlapping the supporting ledge (10) of the connection wall (4) and the supporting edge (11) of the supporting wall (7) is provided to serve as a base on which the plate sections (1) are fastended with screws.

4. Connecting beam according to one of the claims 1 to 3, characterized in that it is provided at the ends of the abutting plate sections (1) of a subdivided, foldable loading platform as hinge profile (20) with two connection walls (24) facing one another, each connection wall having on its inner side above the supporting ledge (10) a pin bearing (25) for a hinge pin (26), that the hinge pins of the foldable parts of the loading platform are connected with each other through brackets (29) and that the connection walls (24) and the pin bearings (25) are formed in such a way that the two parts of the loading platform are being supported by the connection walls (24) when lengthened and can strike together when folded.

5. Connecting beam according to claim 4, characterized in that the abutting wall (8) for the plate sections (1) and the supporting ledge (10) are formed at the pin bearing (25).

FIG. 1

FIG. 2

FIG. 3

FIG. 4

FIG. 5

FIG. 6

4/4

FIG. 7